# EUROPÄISCHE PATENTSCHRIFT

(11) **EP 1 535 803 B1**
(45) Veröffentlichungstag und Bekanntmachung des Hinweises auf die Patenterteilung: **17.10.2007**
(21) Anmeldenummer: 03027508.5
(22) Anmeldetag: 28.11.2003
(51) Int. Cl.: B60R 16/02

(54) **Zentralelektrik für ein Kraftfahrzeug**
Central electric power control device for a vehicle
Unité d'interconnexion électrique pour un véhicule

(43) Veröffentlichungstag der Anmeldung: 01.06.2005
(73) Patentinhaber: Delphi Technologies, Inc., Troy, MI 48007 (US)
(72) Erfinder: Giesen, Marko, 51588 Nümbrecht (DE); Trommer, Frank, O., 51588 Nümbrecht (DE); Lehmann, Klaus, 53797 Lohmar (DE); Stadler, Peter, 57482 Wenden (DE); Schulte, Thomas, 58540 Meinerzhagen Windebruch (DE); Exner, Joachim, 51145 Köln (DE); Heinrich, Markus, 51588 Nümbrecht (DE)
(74) Vertreter: Manitz, Finsterwald & Partner GbR

(56) Entgegenhaltungen:
- EP-A- 1 203 698
- DE-A- 19 724 254
- DE-U- 8 431 604
- US-A- 6 150 734
- US-A1- 2002 160 634
- PATENT ABSTRACTS OF JAPAN vol. 1998, no. 10, 31. August 1998 (1998-08-31) & JP 10 126963 A (YAZAKI CORP), 15. Mai 1998 (1998-05-15)
- DATABASE WPI Week 199830 Derwent Publications Ltd., London, GB; AN 1998-340366 XP002277830 "Power distribution apparatus for vehicle" & JP 10 126963 A (YAZAKI CORP), 15. Mai 1998 (1998-05-15)

## Beschreibung

Die vorliegende Erfindung betrifft eine Zentralelektrik für ein Kraftfahrzeug.

Kraftfahrzeuge weisen eine Vielzahl von elektrischen Verbrauchern bzw. Lasten auf, die bzw. deren Zuleitungen durch Sicherungen vor Überlastung gesichert werden müssen und/oder die ein- und ausgeschaltet werden müssen. Hierzu ist vielfach eine Zentralelektrik vorgesehen, die über eine Steuerschaltung und mehrere Lastschaltvorrichtungen, beispielsweise Relais, sowie gegebenenfalls Sicherungen verfügt. Die Steuereinrichtung dient dazu, auf ihr über entsprechende Steuereingänge zugeführte Signale hin, die Lastschaltvorrichtungen zu betätigen und damit entsprechende Laststromkreise zu öffnen oder zu schließen.

Die hierbei verwendeten Lastschalter dienen dabei in der Regel zur Schaltung relativ großer Ströme, so dass sie erhebliche Abwärme verursachen, die die Funktion der Steuerschaltung beeinträchtigen kann. Ein gutes thermisches Verhalten der Zentralelektrik ist daher für deren Lebensdauer von einiger Bedeutung.

Darüber hinaus sollte eine solche Zentralelektrik möglichst einfach und damit kostengünstig aufgebaut sein.

Eine Schaltungselektrik mit den Merkmalen des Oberbegriffes des Anspruches 1 ist aus EP 1203698 A2 bekannt.

Der vorliegenden Erfindung liegt daher die Aufgabe zugrunde, eine Zentralelektrik mit einfachem Aufbau bereitzustellen, die ein gutes thermisches Verhalten zeigt.

Die Aufgabe wird gelöst durch eine Zentralelektrik mit den Merkmalen des Anspruchs 1.

Die erfindungsgemäße Zentralelektrik für ein Kraftfahrzeug umfasst eine Steuerschaltung auf einem Schaltungsträger, wenigstens eine Stromschiene, die wenigstens teilweise neben dem Schaltungsträger angeordnet ist und wenigstens einen nicht auf dem Schaltungsträger oder einem Teil der Steuerschaltungen aufliegenden Kontaktabschnitt aufweist, wenigstens zwei Ausgangskontaktelemente, die auf einer von der Steuerschaltung wegweisenden Seite der Stromschiene angeordnet sind, und wenigstens zwei Lastschalteinrichtungen, die jeweils einen mit einem entsprechenden Steuerausgang der Steuerschaltung elektrisch verbundenen Steuereingang und zwei Laststromanschlüsse, von denen einer mit der Stromschiene und der andere mit jeweils einem der beiden Ausgangskontaktelemente elektrisch verbunden ist, aufweisen, und die ganz oder teilweise auf der Stromschiene und/oder auf einer der Steuerschaltung abgewandten Seite der Stromschiene angeordnet sind.

Unter einer Lastschalteinrichtung wird dabei eine beliebige Einrichtung mit zwei Laststromanschlüssen, d.h. einem Laststromeingang und einem Laststromausgang, verstanden, mittels derer auf wenigstens ein entsprechendes Steuersignal der Steuerschaltung hin die jeweiligen Laststromanschlüsse, d.h. der jeweilige Laststromeingang und der jeweilige Laststromausgang, elektrisch miteinander verbindbar oder voneinander elektrisch trennbar sind, wobei auch größere Ströme, wie sie beispielsweise bei bestimmten Verbrauchern in Kraftfahrzeugen auftreten, geschaltet werden können.

Erfindungsgemäß ist die Stromschiene so relativ zu dem Schaltungsträger angeordnet, dass diese wenigstens teilweise neben dem Schaltungsträger angeordnet ist und wenigstens einen nicht auf dem Schaltungsträger oder einem Teil der Steuerschaltung aufliegenden Kontaktabschnitt aufweist, mit dem die entsprechenden Laststromanschlüsse, d.h. die Laststromeingänge, der Lastschalteinrichtungen verbunden sind. Die Stromschiene liegt also nicht vollständig auf dem Schaltungsträger oder der Steuerschaltung auf, sondern erstreckt sich wenigstens teilweise neben und/oder unter bzw. auf dem Schaltungsträger.

Durch die Anordnung der Lastschalteinrichtungen auf der Stromschiene und/oder auf einer von dem Schaltungsträger abgewandten Seite sind diese räumlich von dem Schaltungsträger und insbesondere der darauf angeordneten Steuerschaltung getrennt, so dass schon von daher ein Wärmetransport von den Lastschalteinrichtungen zu der Steuerschaltung stark herabgesetzt ist.

Darüber hinaus sind typischerweise die Lastschalteinrichtungen über Kontakte mit der Stromschiene verbunden, über die große elektrische Ströme führbar sind und die daher auch eine entsprechend große thermische Leitfähigkeit aufweisen. Daher kann weiterhin Wärme von den Lastschalteinrichtungen unmittelbar über die Stromschiene abgeführt werden, so dass auch von daher eine geringere thermische Belastung der Steuerschaltung und eine gute Kühlung der Lastschalteinrichtungen erzielt wird.

Weiterbildungen und bevorzugte Ausführungsformen der Erfindung sind in den Ansprüchen, der Beschreibung und den Zeichnungen beschrieben.

Zur Zuführung von Schaltsignalen müssen die Lastschalteinrichtungen bzw. deren Steuereingänge mit entsprechenden Steuerausgängen der Steuerschaltung elektrisch verbunden sein. Um bei Verwendung einer größeren Anzahl von Lastschalteinrichtungen gleichzeitig die Verwendung nur kurzer Zuleitungen zu ermöglichen, ist es bevorzugt, dass sich die Stromschiene entlang einer Seite des Schaltungsträgers erstreckt, so dass die Lastschalteinrichtungen entlang der Stromschiene und damit auch entlang des Schaltungsträgers angeordnet werden können.

Der Schaltungsträger, die Stromschiene und die Ausgangskontaktelemente sind auf einem flächigen Trägerelement angeordnet und ein Bereich der Oberfläche des Trägerelements, auf dem die Ausgangskontaktelemente angeordnet sind, ist durch wenigstens den Kontaktabschnitt der Stromschiene räumlich von dem Schaltungsträger getrennt. In diesem Bereich können insbesondere auch wenigstens einige der Lastschalteinrichtungen angeordnet sein. Der Schaltungsträger braucht dabei nicht unbedingt in direktem Kontakt mit der Oberfläche des Trägerelements zu sein. Vielmehr ist es möglich, dass dieser nur in kleinen Abschnitten auf der Stromschiene aufliegt. Besonders bevorzugt kann die Stromschiene in das Trägerelement bzw. entsprechende Ausnehmungen darin eingepresst sein. Alternativ ist es besonders bevorzugt, das Trägerelement durch Spritzguss herzustellen und dabei die Stromschiene in dieses wenigstens teilweise einzuspritzen.

Um eine weiter verbesserte Ableitung von Wärme der Lastschalteinrichtungen zu erreichen, ist es bevorzugt, dass die Stromschiene zur Ableitung von Wärme mit einem Kühlkörper thermisch gekoppelt ist. Der Kühlkörper ist dabei vorzugsweise so in der Zentralelektrik angeordnet, dass dieser nicht direkt in Kontakt mit der Steuerschaltung oder dem Schaltungsträger der Steuerschaltung ist. Dabei ist es besonders bevorzugt, dass zwischen der Stromschiene und dem Kühlkörper eine möglichst dünne Schicht einer gut wärmeleitenden Paste oder eines gut wärmeleitenden Klebers angeordnet ist, um einen möglichst guten Wärmeübergang zwischen der Stromschiene und dem Kühlkörper sicherzustellen. Andernfalls verhindert der dann zwischen der Stromschiene und der Oberfläche des Kühlkörpers unvermeidliche Luftspalt einen guten Wärmeübergang. Wird ein Kühlkörper verwendet, der aus einem elektrisch leitenden Material, insbesondere einem Metall gefertigt ist, erfolgt dabei die thermische Kopplung zwischen der Stromschiene und dem Kühlkörper vorzugsweise durch eine elektrisch isolierende Schicht hoher Wärmeleitfähigkeit. Hierfür können beispielsweise hoch wärmeleitende, aber elektrisch isolierende Kleber verwendet werden.

Zur möglichst guten Wärmeableitung ist es bevorzugt, dass wenigstens eine der Lastschalteinrichtungen auf der Stromschiene gehalten ist. Dadurch findet nicht nur eine sehr gute Wärmeableitung zur Stromschiene über den elektrisch und daher auch thermisch leitend mit der Stromschiene verbundenen Laststromanschluss bzw. -eingang, sondern auch durch Wärmestrahlung statt, die dann durch die Stromschiene gut abgeführt werden kann. Vorzugsweise liegt die Lastschalteinrichtung wenigstens mit einer Fläche auf der Stromschiene auf, so dass auch über die aufliegende Fläche eine besonders gute thermische Kopplung erfolgen kann.

Hierzu eignen sich als Lastschalteinrichtungen beispielsweise elektronische Bauelemente, die beispielsweise in einem Gehäuse angeordnet sein können.

Es ist jedoch besonders bevorzugt, dass wenigstens eine Lastschalteinrichtung ein nicht verpacktes elektronisches Bauelement, vorzugsweise ein MOSFET-Bauelement, aufweist, das auf der Stromschiene oder auf einem Stanzgitterelement neben der Stromschiene angeordnet ist. Durch den üblicherweise eher großen Querschnitt von Stanzgitterelementen kann auch über diese eine gute Wärmeabfuhr erfolgen. Bei Anordnung auf der Stromschiene kann sich eine noch effektivere Wärmeabfuhr ergeben. Insbesondere kann das MOSFET-Bauelement bei Anordnung auf der Stromschiene in einer so genannten "high side"-Schaltung verwendet werden, bei der die Lastschalteinrichtung zwischen einen Pluspol einer Spannungsversorgung und den Verbraucher geschaltet ist, während bei Anordnung auf dem Stanzgitter eine "low side"-Schaltung des MOSFET-Bauelements ermöglicht wird, bei der die Lastschalteinrichtung mit dem Minuspol verbunden ist. Vorzugsweise ist das MOSFET-Bauelement auch auf der Stromschiene bzw. dem Stanzgitterelement gehalten. Dazu wird vorzugsweise ein hoch wärmeleitender Kleber verwendet, der dann gleichzeitig zu einem besonders guten Wärmeübergang zwischen dem Bauelement und der Stromschiene bzw. dem Stanzgitterelement führt. Durch die Verwendung von unverpackten elektronischen Bauelementen entfällt ein möglicher Wärmewiderstand, der durch ein Gehäuse des Bauelements verursacht wird, so dass sich auch aus dieser Sicht ein besonders günstiges thermisches Verhalten ergibt. Darüber hinaus kann eine solche Zentralelektrik besonders platzsparend ausgebildet sein.

Um eine Diagnose der Funktion des MOSFET-Bauelements und gegebenenfalls eines durch dieses geschalteten Laststromkreises zu ermöglichen, ist es bevorzugt, dass die Steuerschaltung zur Verwendung eines MOSFET-Bauelements mit Strommessung ausgebildet ist. Unter einem MOSFET-Bauelement mit Strommessung bzw. -erfassung wird dabei ein MOSFET-Bauelement verstanden, das einen häufig als "Current Sense"-Ausgang bezeichneten Ausgang aufweist, über den ein Stromsignal abgebbar ist, das die Größe des in dem MOSFET-Bauelement fließenden Laststroms zwischen "Source" und "Drain" wiedergibt.

Bei einer solchen Zentralelektrik brauchen die Lastschalteinrichtungen jedoch nicht unbedingt MOSFET-Bauelemente zu sein. Vielmehr ist es für ein modulares Konzept zur Herstellung von Zentralelektriken mit verschiedenen Lastschalteinrichtungen bevorzugt, dass eine Steuerschaltung zur Ansteuerung verschiedener Lastschalteinrichtungen vorgesehen ist.

Je nach Anwendung ist es weiterhin bevorzugt, dass wenigstens eine der Lastschalteinrichtungen ein Relais ist, das auf der dem Schaltungsträger abgewandten Seite der Stromschiene angeordnet ist. Insbesondere kann dieses in dem Bereich der Oberfläche des Trägerelements angeordnet sein, auf dem auch die Ausgangskontaktelemente angeordnet sind.

Weiterhin ist es bevorzugt, dass in diesem Bereich auch Halterungen für Sicherungen angeordnet sind, bei denen ein Kontakt mit einer Lastschalteinrichtung oder der Stromschiene und ein anderer Kontakt mit einem Ausgangskontaktelement verbunden ist.

Um verschiedene Zentralelektriken nach einem modularen Konzept mit möglichst vielen gleichen Komponenten produzieren zu können, ist es bevorzugt, dass die Steuerschaltung zur Verwendung sowohl mit Lastschalteinrichtungen zum Schalten von 12 Volt Versorgungsspannung als auch Lastschalteinrichtungen zum Schalten von 42 Volt Versorgungsspannung ausgebildet ist. Welche der beiden vorgesehenen Alternativen konkret zum Einsatz kommt, hängt dann von den Lastschalteinrichtungen bzw. der Verwendung der Zentralelektrik ab.

Um durch die Zentralelektrik eine möglichst große Anzahl von Lastschalteinrichtungen bereitstellen zu können, ist es bevorzugt, dass sich zwei Stromschienen entlang gegenüberliegenden Seiten des Schaltungsträgers erstrecken. Beide Stromschienen weisen dabei wenigstens einen nicht auf dem Schaltungsträger oder einem Teil der Steuerschaltung aufliegenden Kontaktabschnitt auf. Weiterhin sind die Lastschalteinrichtungen ganz oder teilweise auf den Stromschienen und/oder auf jeweils einer der Steuerschaltung abgewandten Seite der Stromschienen angeordnet. Es ergibt sich in diesem Fall ebenfalls trotz einer hohen Dichte von Funktionen bzw. Lastschalteinrichtungen ein gutes thermisches Verhalten der Zentralelektrik.

Vorzugsweise sind dabei entweder beide Stromschienen thermisch mit einem Kühlkörper gekoppelt, oder es ist für jede der Stromschienen ein entsprechender Kühlkörper vorgesehen. Eine thermische Verbindung kann dabei in der zuvor erwähnten Weise hergestellt werden.

Um eine möglichst einfache Verbindung von Verbrauchern mit den Ausgangskontaktelementen zu ermöglichen, ist es bevorzugt, dass die Ausgangskontaktelemente als Steckkontaktelemente ausgebildet sind. Vorzugsweise können diese als Kontaktstifte oder -zungen ausgebildet sein.

Insbesondere in diesem Fall ist es bevorzugt, dass ein Gehäuseteil mit einer Öffnung und einer die Öffnung wenigstens teilweise umgebenden Führung vorgesehen ist, und dass wenigstens einige der Ausgangskontaktelemente so angeordnet sind, dass diese zusammen mit der Führung einen Steckverbinder oder eine Geräteaufnahme bilden. Es ergibt sich so ein besonders einfacher Aufbau der Zentralelektrik, wobei beispielsweise ein in einem Gehäuseunterteil angeordnetes Trägerelement, das den Schaltungsträger, die Lastschalteinrichtungen, die Stromschiene und die Ausgangskontaktelemente trägt, einfach die Steckkräfte aufnehmen kann, die beim Zusammenstecken mit einem komplementären, mit einem Kabelbaum verbundenen Steckverbinder auftreten.

Um eine möglichst gute elektrische Verbindung zwischen den Ausgangskontaktelementen und den Lastschalteinrichtungen zu erhalten, ist es bevorzugt, dass wenigstens eines der Ausgangskontaktelemente einstückig als Biegeteil ausgebildet ist, dessen nicht zur Herstellung eines Steckkontaktes verwendetes Ende mit dem entsprechenden Laststromanschluss einer der Lastschalteinrichtungen verbunden ist. Bei dem Laststromanschluss handelt es sich also um den Laststromausgang. Hierdurch ergibt sich ein besonders großer Leiterquerschnitt, der eine verlustarme Leitung auch großer Ströme ermöglicht. Darüber hinaus können solche sehr kostengünstig herstellbaren Ausgangskontaktelemente vergleichsweise große Steckkräfte aufnehmen, so dass sich auch ein robuster Aufbau ergibt. Insbesondere können die Ausgangskontaktelemente als Stanzblechteile ausgebildet sein, was die Herstellung weiter vereinfacht.

Es kann der Fall auftreten, dass von den Verbrauchern, die über die Ausgangskontaktelemente mit Strom versorgt werden können, Leitungen zurück zu der Steuerschaltung geführt werden müssen. Dies kann beispielsweise zu Diagnosezwecken notwendig sein. Es ist dann bevorzugt, dass ein zur Bildung des Steckverbinders oder der Geräteaufnahme verwendetes Eingangskontaktelement mit einem Eingang der Steuerschaltung verbunden ist. Dieses ist, wie die Ausgangskontaktelemente, auf der dem Schaltungsträger abgewandten Seite der Stromschiene angeordnet.

Zur einfachen Zuführung von Steuersignalen zu der Steuerschaltung ist es bevorzugt, dass auf dem Schaltungsträger ein mit der Steuerschaltung verbundener Steckverbinder angeordnet ist. Ein solcher Steckverbinder kann insbesondere als Geräteaufnahme ausgebildet sein. Ist der Schaltungsträger flächig ausgebildet, ist dabei die Steckrichtung vorzugsweise orthogonal zu der Fläche des Schaltungsträgers ausgerichtet.

Um auch größere Zentralelektriken unter Verwendung von Modulen bauen zu können, ist es bevorzugt, dass eine Befestigungseinrichtung vorgesehen ist, um eine Verlängerung der Stromschiene zu halten und diese elektrisch leitend mit der Stromschiene zu verbinden. Entlang dieser Stromschiene kann dann ein weiterer Schaltungsträger mit einer Steuerschaltung angeordnet werden, der ebenfalls höchstens mit einem kleinen Abschnitt der Stromschiene in Kontakt ist, so dass wenigstens Kontaktflächen der Stromschiene frei bleiben. Insbesondere ist es so auch möglich, eine gegebene Zentralelektrik zu erweitern, ohne dass ein vollständiger Neuentwurf der Zentralelektrik notwendig wäre.

Zu diesem Zweck ist es weiterhin besonders bevorzugt, dass die Befestigungseinrichtung dazu ausgebildet ist, Verlängerungen zweier auf gegenüberliegenden Seiten der Steuerschaltung, vorzugsweise parallel, angeordneter Stromschienen zu halten und diese elektrisch leitend mit den Stromschienen zu verbinden. Auf diese Weise kann eine zusätzliche Steuerschaltung wiederum zwischen den beiden Stromschienen angeordnet werden, so dass auch diese räumlich von an den Verlängerungen der Stromschienen angeordneten Lastschalteinrichtungen getrennt und damit vor Überhitzung geschützt ist.

Dabei ist es besonders bevorzugt, dass zwei durch die Befestigungseinrichtung gehaltenen Stromschienenverlängerungen durch eine Brücke elektrisch miteinander verbunden sind. Wird nur eine der beiden Stromschienen mit einem Pol einer Spannungsquelle verbunden, wird durch die Verwendung der Brücke sichergestellt, dass beide Stromschienenverlängerungen auf im Wesentlichen gleichem Potential liegen, so dass die Anzahl der Anschlüsse zu der Spannungsquelle gering gehalten werden kann.

Die Erfindung wird nun weiter beispielhaft anhand der Zeichnungen erläutert. Es zeigen:
- Fig. 1: eine schematische perspektivische Ansicht einer Zentralelektrik nach einer ersten bevorzugten Ausführungsform der Erfindung,
- Fig. 2: einen vergrößerten Ausschnitt aus Fig. 1, der einen Abschnitt einer Stromschiene und einen Seitenbereich mit Kontaktelementen zeigt,
- Fig. 3: eine schematische perspektivische Ansicht einer Trägerplatte mit darauf angeordneten weiteren Bestandteilen einer Zentralelektrik nach einer zweiten bevorzugten Ausführungsform der Erfindung,
- Fig. 4: eine schematische perspektivische Ansicht einer Trägerplatte mit darauf angeordneten weiteren Komponenten einer Zentralelektrik nach einer dritten bevorzugten Ausführungsform der Erfindung, und
- Fig. 5: eine perspektivische Darstellung der Zentralelektrik in Fig. 1 mit zwei Stromschienenverlängerungen.

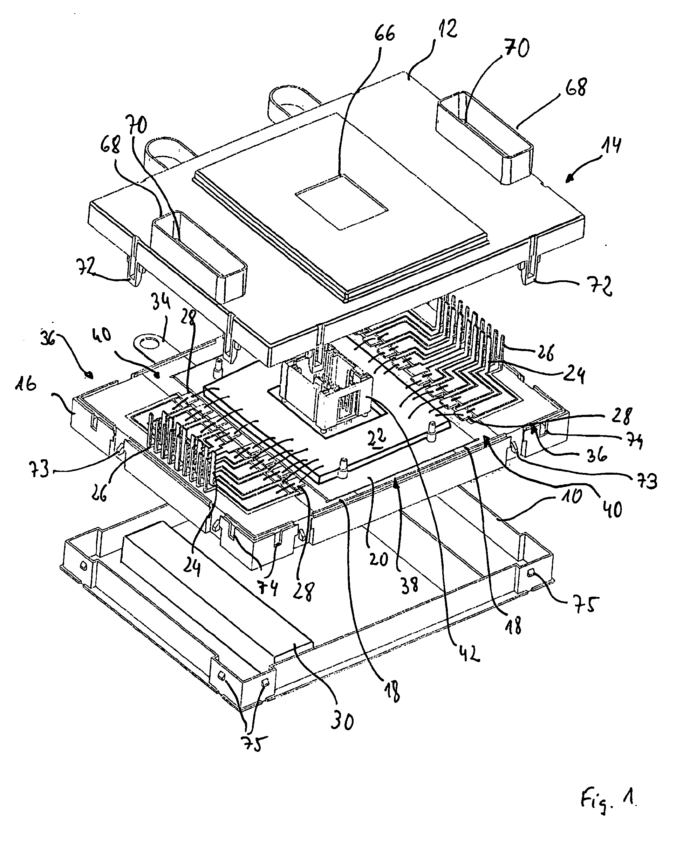

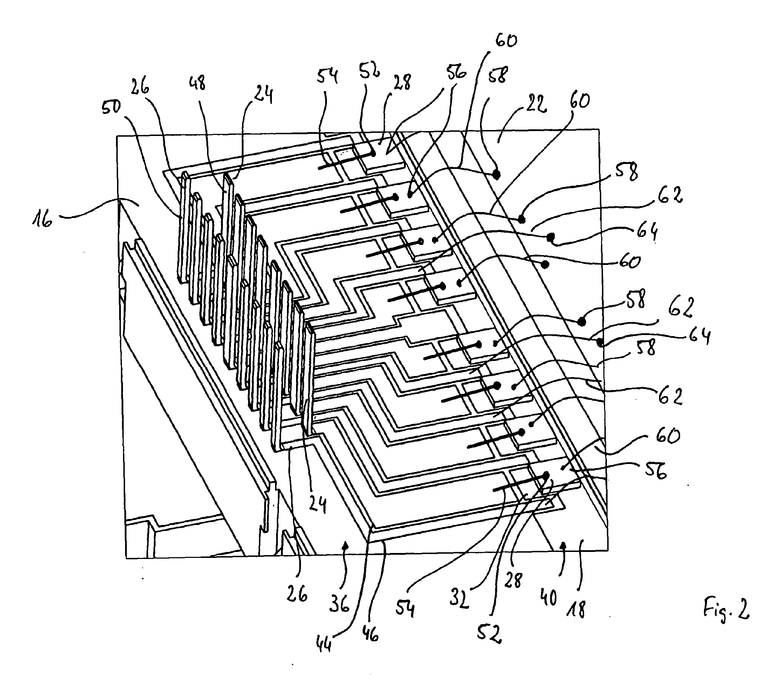

In Fig. 1 und Fig. 2 umfasst eine Zentralelektrik nach einer ersten bevorzugten Ausführungsform der Erfindung in einem durch ein Gehäuseunterteil 10 und durch ein Gehäuseoberteil 12 gebildeten Gehäuse 14 als Trägerelement eine Trägerplatte 16, die zwei parallel zueinander angeordnete Stromschienen 18, zwischen den Stromschienen 18 einen Schaltungsträger 20 in Form einer Platine mit einer Steuerschaltung 22, Ausgangskontaktelemente 24, Eingangskontaktelemente 26 sowie Lastschalteinrichtungen in Form von nicht verpackten bzw. nicht gehäusten MOSFET-Bauelementen 28 trägt. Weiterhin sind in dem Gehäuseunterteil 10 Kühlkörper angeordnet, von denen nur der Kühlkörper 30 gezeigt ist.

Die Trägerplatte 16 ist als Spritzgussteil aus Kunststoff hergestellt, wobei bei dessen Herstellung die parallel zueinander verlaufenden Stromschienen 18 teilweise umspritzt wurden.

Die Stromschienen 18 sind spiegelsymmetrisch zueinander ausgebildet und angeordnet und weisen auf ihren dem Schaltungsträger 20 gegenüberliegenden, äußeren Seiten eine Zahnung mit Zähnen 32 auf.

An jeweils einem ihrer Enden sind jeweils Anschlusslaschen 34 ausgebildet, von denen in der Figur nur eine sichtbar ist und die zum Anschluss von entsprechenden Kabeln zu einer Spannungsquelle, beispielsweise einer Kraftfahrzeugbatterie dienen. Die Stromschienen 18 selbst sind aus einem sehr leitfähigen Metall gefertigt und weisen einen Querschnitt auf, der es erlaubt, über diese große Ströme ohne große Verluste zu führen.

Die parallel zueinander verlaufenden Stromschienen 18 teilen die Fläche der Trägerplatte 16 in zwei etwa gleich große Seitenabschnitte 36 und einen Mittelabschnitt 38 auf.

Auf dem Mittelabschnitt 38 ist der Schaltungsträger 20 mit der grob schematisch gezeigten Steuerschaltung 22 angeordnet, wobei die Stromschienen 18 wenigstens teilweise neben dem Schaltungsträger 20 verlaufen und der Schaltungsträger 20 teilweise mit den Stromschienen 18 überlappt, so dass wenigstens Kontaktabschnitte 40, im Beispiel Längsstreifen mit der Zahnung, nicht durch den Schaltungsträger 20 abgedeckt sind und freiliegen.

In der Mitte des Schaltungsträgers 20 ist ein Steckverbinder 42 angeordnet, dessen Steckrichtung in etwa orthogonal zu der Fläche der Trägerplatte 16 verläuft. Dieser Steckverbinder 42 dient zur Verbindung mit einem komplementären Steckverbinder von einer zentralen Steuereinrichtung, mittels derer die Zentralelektrik ansteuerbar ist, und weist in den Figuren nicht gezeigte Verbindungsleitungen zu der nur sehr schematisch gezeigten Steuerschaltung 22 auf, damit dieser entsprechende Steuersignale zugeführt werden können.

In Ausnehmungen 44 bzw. 46 in den Seitenabschnitten 36 der Trägerplatte 16 sind die einstückig als Stanzbiegeteile stanzgitterartig ausgebildeten Ausgangs- und Eingangskontaktelemente 24 bzw. 26 eingepresst. Diese weisen an ihren jeweils den Stromschienen 18 abgewandten Enden orthogonal von der Fläche der Trägerplatte 16 abgebogene Steckkontaktzungen 48 bzw. 50 auf (vgl. Fig. 2).

Auf den Zähnen 32 der Stromschienen 18 sind die als Lastschalteinrichtungen dienenden MOSFET-Bauelemente 28 angeordnet.

Sie weisen jeweils zwei Laststromanschlüsse auf, von denen einer auf der der jeweiligen Stromschiene 18 zugewandten Seite und der andere auf der gegenüberliegenden Seite des MOSFET-Bauelements 28 ausgebildet sind. Die jeweils zu der Stromschiene 18 weisenden, als Laststromeingänge dienenden Laststromanschlüsse sind in den Figuren nicht sichtbar, während die auf den gegenüberliegenden Seiten der MOSFET-Bauelemente 28 angeordneten als Laststromausgänge dienenden Laststromanschlüsse mit dem Bezugszeichen 52 bezeichnet sind.

Die den Stromschienen 18 zugewandten Laststromanschlüsse sind mit diesen direkt kontaktiert, während die als Laststromausgänge dienenden Laststromanschlüsse 52 mit den entsprechenden Ausgangskontaktelementen 24 durch für größere Stromstärken ausgelegte Verbindungsdrähte 54 verbunden sind, von den in den Figuren der Übersichtlichkeit halber nicht alle gezeigt sind.

Die MOSFET-Bauelemente 28 verfügen weiterhin über Steuereingänge 56, über die den MOSFET-Bauelementen 28 jeweils Schaltsignale zuführbar sind, auf die hin die Laststromanschlüsse des jeweiligen MOSFET-Bauelements leitend miteinander verbunden oder elektrisch voneinander getrennt werden, so dass die MOSFET-Bauelemente 28 als elektrisch betätigbare Schalter dienen können. Die Steuereingänge 56 sind mit Steuerausgängen 58 der Steuerschaltung 22 über Bonddrähte 60 verbunden, von denen in den Figuren jeweils der Übersichtlichkeit halber nur einige gezeigt sind.

Schließlich verfügen die MOSFET-Bauelemente 28 über eine "currentsense"-Funktion, die über in den Figuren nicht gezeigte Stromsignalausgänge der jeweiligen MOSFET-Bauelemente 28 Stromsignale abgegeben, die die Stärke des Laststroms durch diese Bauelemente wiedergeben. Die Steuerschaltung 22 ist zur Verarbeitung dieser Signale zu Diagnosezwecken ausgebildet.

Um einerseits die nicht gehäusten MOSFET-Bauelemente 28, die auf den Zähnen 32 der Stromschienen 18 angeordnet sind, mechanisch auf den Stromschienen 18 zu halten, und andererseits einen guten Wärmeübergang zwischen den MOSFET-Bauelementen 28 und den Stromschienen 18 herzustellen, sind diese mit einem hoch wärmeleitenden, aber elektrisch isolierenden Kleber auf die Stromschienen 18 aufgeklebt.

Die Eingangskontaktelemente 26 greifen mit ihren den Stromschienen 18 zugewandten Enden in die Zwischenräume zwischen den Zähnen 32 und sind über Verbindungsleitungen 62 mit Steuereingängen 64 der Steuerschaltung 22 verbunden. Von diesen Verbindungsleitungen 62 sind der Übersichtlichkeit halber in den Figuren nur einige gezeigt.

Das Gehäuseunterteil 10 ist als Kunststoffspritzgussteil so geformt, dass es in die sich rahmenartig nach unten öffnende Trägerplatte 16 mit den darauf angeordneten Komponenten formschlüssig aufgenommen werden kann.

In dem Gehäuseunterteil 10 sind dabei in der Richtung, in der das Gehäuseunterteil 10 in die Trägerplatte 16 einsetzbar ist, unterhalb der Stromschienen 18 jeweils die Kühlkörper angeordnet, von denen in Fig. 1 der Übersichtlichkeit halber nur der Kühlkörper 30 gezeigt ist. Die Kühlkörper sind über hoch wärmeleitende, elektrisch isolierende Kleber mit den Unterseiten der Stromschienen 18 unter Ausbildung eines sehr guten thermischen Kontakts mit nur einem geringen Wärmewiderstand verbunden.

Das Gehäuseoberteil 12 weist zum einen eine Steckverbinderöffnung 66 zur Aufnahme des Steckverbinders 42 auf dem Schaltungsträger 20 und zum anderen an gegenüberliegenden Seiten Führungskragen 68 und Kontaktelementöffnungen 70 auf, durch die die Steckkontaktzungen 48 bzw. 50 der Eingangs- bzw. Ausgangskontaktelemente 26 bzw. 24 führbar sind. Diese Führungskragen 68 bilden zusammen mit den Steckkontaktzungen 48 bzw. 50 Steckverbinder in Form einer Geräteaufnahme, an die Steckverbinder von Leitungen zu Verbrauchern bzw. Lasten der Kraftfahrzeugelektrik anschließbar sind.

Das Gehäuseoberteil 12, die Trägerplatte 16 und das Gehäuseunterteil 10 sind zur Ausbildung des Gehäuses über zueinander komplementäre Rastelemente 72, 73, 74 und 75 miteinander verrastbar.

Im eingebauten Zustand sind die Stromschienen 18 mit einem Pluspol einer in den Figuren nicht gezeigten Kraftfahrzeugbatterie verbunden. Zur Zuführung von Signalen von zentralen Steuereinrichtungen dient der Steckverbinder 42 auf dem Schaltungsträger 20. Über die durch die Eingangs- und Ausgangskontaktelemente 26 bzw. 24 und die Führungskragen 68 gebildeten Geräteaufnahmen ist die Zentralelektrik mit entsprechenden Verbrauchern verbunden.

Auf Steuersignale hin gibt die Steuerschaltung 22 entsprechende Schaltsignale an eine oder mehrere der Lastschalteinrichtungen bzw. eines oder mehrere der MOSFET-Bauelemente 28 ab, die daraufhin ihre Laststromanschlüsse kurzschließen oder voneinander trennen, so dass Spannung von der Batterie über die Stromschiene und das MOSFET-Bauelement an die Ausgangskontaktelemente und damit zu den Verbrauchern führbar bzw. von diesen abschaltbar ist.

Von den Verbrauchern kommende Signale können über die Eingangskontaktelemente 26 der Steuerschaltung 22 zugeführt und dort verarbeitet werden.

Die bei der Schaltung der großen, von der Batterie über die Stromschiene zu den Verbrauchern fließenden Ströme verursachte Wärme wird von ihrer Quelle, nämlich den MOSFET-Bauelementen 28 unmittelbar auf die Stromschienen 18 und von dort unmittelbar auf die Kühlkörper 30 abgeführt, so dass schon aus diesem Grund eine thermische Belastung der Steuerschaltung 22 durch die Lastschalteinrichtungen 28 weitgehend unterdrückt werden kann.

Weiterhin ist durch die räumliche Trennung der Lastschalteinrichtung von der Steuerschaltung 22 auch eine Übertragung von Wärme durch Strahlung oder auch Konvektion sehr gering. Insgesamt ergibt sich so ein sehr gutes thermisches Verhalten der Zentralelektrik.

Die Steuerschaltung 22 ist weiterhin dazu ausgebildet, MOSFET-Bauelemente 28 zum Schalten von 12 Volt Bordspannungen oder auch von 42 Volt Bordspannungen anzusteuern, so dass die Steuerschaltung 22 als Modul für verschiedene Zentralelektriken verwendet werden kann.

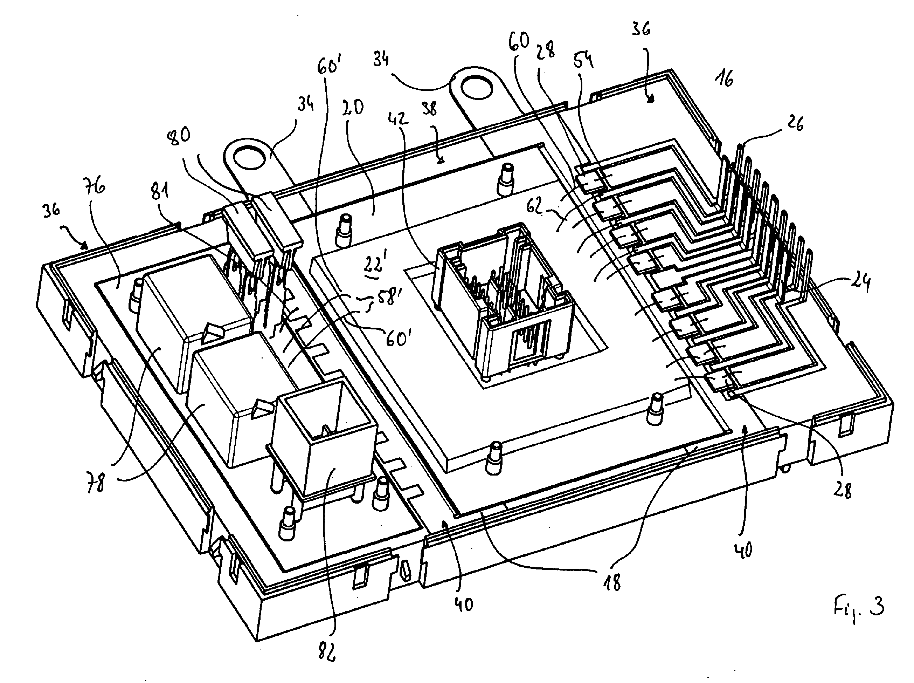

Eine Zentralelektrik nach einer zweiten bevorzugten Ausführungsform der Erfindung unterscheidet sich von der Zentralelektrik des ersten Ausführungsbeispiels durch eine modifizierte Steuerschaltung 22' und dadurch, dass in dem einen Seitenabschnitt 36 statt der Eingangs- und Ausgangskontaktelemente 26 bzw. 24 und statt der MOSFET-Bauelemente 28 eine Platine 76 vorgesehen ist, auf der Relais 78, Sicherungen 80 und ein Steckverbinder 82 vorgesehen sind. Dementsprechend ist, in den Fig. 3 nicht gezeigt, das Gehäuseoberteil 12 so modifiziert, dass auf der Seite, auf der der Steckverbinder 82 angeordnet ist, statt des Führungskragens 68 um die Kontaktelementöffnungen 70 ein entsprechender Durchbruch für den Steckverbinder 82 vorgesehen ist. Für die unveränderten Komponenten werden die gleichen Bezugszeichen wie im ersten Ausführungsbeispiel verwendet und die Ausführungen zu diesen gelten entsprechend auch hier.

Die Steuerelektronik 22' ist dazu ausgebildet, nun neben den MOSFET-Bauelementen 28 auf der Platine 76 abgewandten Stromschiene 18 die Relais 78 auf der Platine 76 anzusteuern. Dazu ist, in Fig. 3 nur schematisch gezeigt, die Steuerschaltung 22' über Steuerausgänge 58' und Bonddrähte 60' mit entsprechenden in den Figuren nicht gezeigten Leiterbahnen auf der Platine 76 verbunden, die zu den entsprechenden Schalteingängen der Relais 78 führen. Den Laststrom führende Leitungen zu bzw. von den Relais 78 sind zum einen, in Fig. 3 nur schematisch gezeigt, mit der Stromschiene 18 über Sicherungen 80 und Drähte 81 bzw., in Fig. 3 nicht sichtbar, mit dem Steckverbinder 82 verbunden. Die Sicherungen 80 dienen dabei zur Absicherung gegen zu große Lastströme.

Auch hier ergibt sich durch die räumliche Trennung der Lastschalteinrichtungen, d.h. der Relais 76 von der Steuerschaltung 22 durch die dazwischenliegende Stromschiene 18 und die elektrisch und damit auch thermisch gut leitende Verbindung der Relais 78 mit der Stromschiene 18 ein sehr gutes thermisches Verhalten. Insbesondere wird die Steuerschaltung 22' gegenüber konvektiver Wärmeübertragung oder Wärmeübertragung durch Strahlung von den Relais 78 gut geschützt.

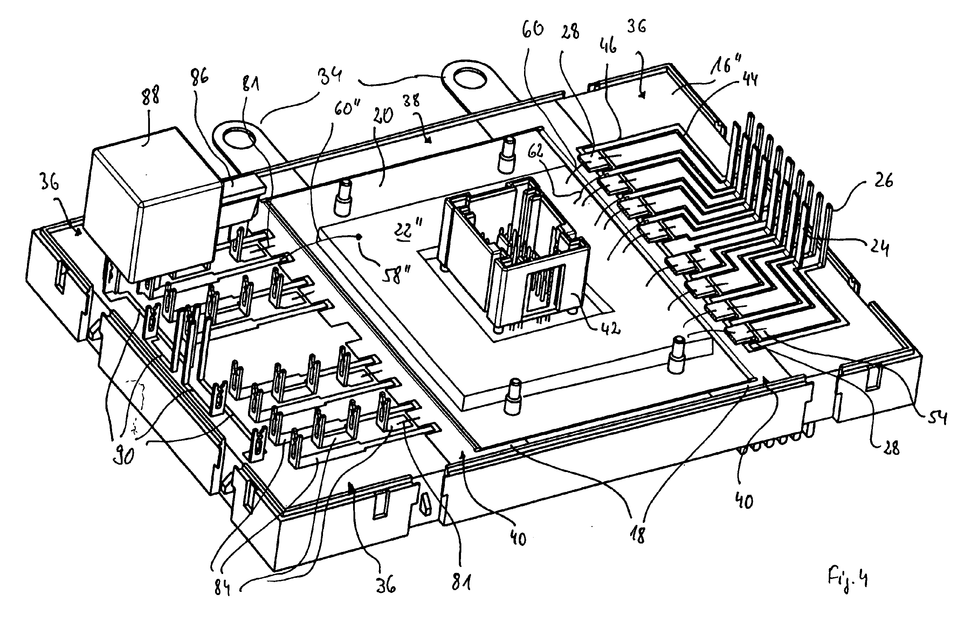

Fig. 4 zeigt eine Trägerplatte 16" einer Zentralelektrik nach einer dritten bevorzugten Ausführungsform der Erfindung, die sich von der Zentralelektrik der zweiten bevorzugten Ausführungsform zum einen dadurch unterscheidet, dass sich in dem Seitenabschnitt 36 statt der Platine 76 Stanzgitterelemente 84, die als Halterung für Sicherungen dienen können, von denen der Übersichtlichkeit wegen nur eine Sicherung 86 in Fig. 4 gezeigt ist, und ein Relais 88 befinden. Zum anderen wird eine zur Ansteuerung des Relais 88 entsprechend geänderte Steuerschaltung 22" verwendet. Für gleiche Komponenten werden gleiche Bezugszeichen verwendet und die Ausführungen zu diesen gelten entsprechend auch hier.

Die Stanzgitterelemente 84 sind dabei teilweise, in Fig. 4 nur teilweise gezeigt, mit der Stromschiene 18 über Drähte 81 verbunden.

Ein Relais 88 als Lastschalteinrichtung ist, beispielhaft gezeigt, auf entsprechende Stanzgitterelementkontakte aufgesteckt. Eine Verbindungsleitung in Form eines Bonddrahts 60" verbindet einen Steuerausgang 58" der Steuerschaltung 22" mit einem Stanzgitterelement zu dem Relais 88. Weiterhin sind Ausgangskontaktelemente 90 mit dem Relais 88 verbunden, die in Steckkontaktzungen enden.

Auch hier ist das nicht gezeigte Gehäuseoberteil 12 dahingehend geändert, dass ein Führungskragen mit einer Kontaktelementöffnung im Bereich der Ausgangskontaktelemente 90 angeordnet ist, um mit diesen einen Steckverbinder bzw. eine Geräteaufnahme zu bilden.

Alle anderen Elemente der Zentralelektrik sind nicht verändert, so dass sich auch hier die gleichen Vorteile wie zuvor ergeben.

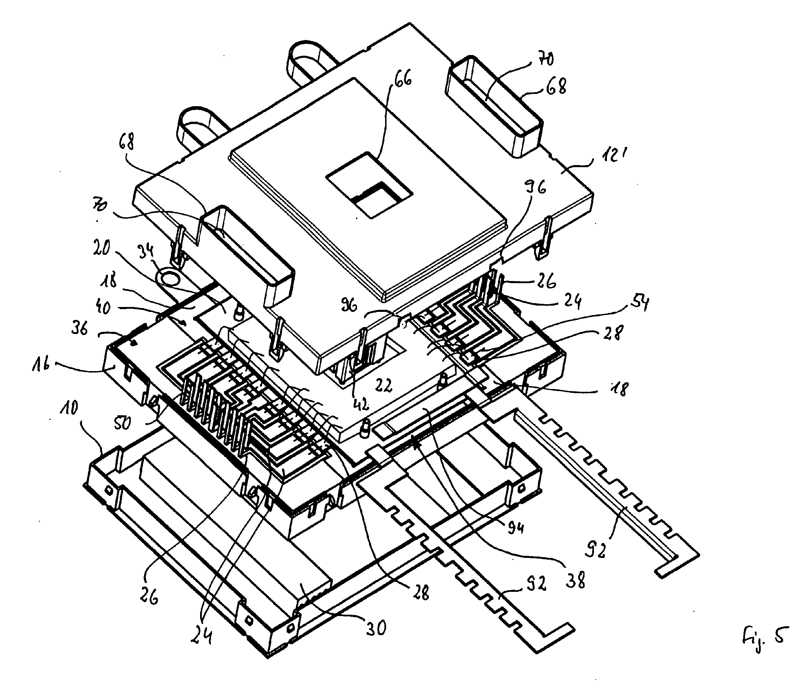

In Fig. 5 ist eine Modifikation der als erstes Ausführungsbeispiel beschriebenen Zentralelektrik gezeigt, bei der in Fig. 5 nicht gezeigte Befestigungen für Stromschienenverlängerungen 92 der Stromschienen 18 vorgesehen sind. Die Befestigung erfolgt dabei im Beispiel durch eine Schraubverbindung.

Die elektrisch leitend mit den Stromschienen 18 verbundenen Stromschienenverlängerungen 92 sind ähnlich wie die Stromschienen 18 ausgebildet und verlaufen im Wesentlichen parallel zueinander. Um nur einen Anschluss 34 einer Stromschiene 18 mit der Kraftfahrzeugbatterie verbinden zu müssen und doch beide Stromschienenverlängerung 92 auf das gleiche Potenzial legen zu können, ist eine Brücke 94 vorgesehen. Es wird so ein U-förmiger Leiter gebildet, in bzw. über dem eine weitere Steuerschaltung angeordnet werden kann.

Das Gehäuseoberteil 12' unterscheidet sich von dem Gehäuseoberteil 12 dadurch, dass in diesem Ausnehmungen 96 vorgesehen sind, die entsprechende Teile der Stromschienenverlängerungen 92 aufnehmen können. Um die Stromschienenverlängerungen 92 und einen auf und/oder zwischen diesen angeordneten Schaltungsträger mit einer darauf angeordneten Steuerschaltung gegen äußere Einflüsse zu schützen, ist ein weiteres Gehäuse vorgesehen, das der Übersichtlichkeit in Fig. 5 nicht gezeigt ist. Es ist im Wesentlichen spiegelbildlich zu dem aus dem Gehäuseoberteil 12' und dem Gehäuseunterteil 10 gebildeten Gehäuse ausgebildet und so angeordnet, dass die Stromschienenverlängerungen 92 durch entsprechende Ausnehmungen in das weitere Gehäuse eintreten können.

Alternativ kann auch ein Gehäuse vorgesehen sein, dass sowohl die Trägerplatte 16 mit den Stromschienen 18 als auch die Stromschienenverlängerungen 92 mit dem Schaltungsträger umschließt.

Alle anderen Teile der Zentralelektrik sind wie im ersten Ausführungsbeispiel ausgebildet.

Bei einem weiteren Ausführungsbeispiel der Erfindung unterscheidet sich die Zentralelektrik von der Zentralelektrik im ersten Ausführungsbeispiel dadurch, dass die MOSFET-Bauelemente 28 nicht auf der Stromschiene 18, sondern auf den der Stromschiene 18 zugewandten Enden der als Stanzgitterelemente ausgebildeten Ausgangskontaktelemente 24 angeordnet sind, wobei dann die Verbindungsdrähte 54 zu der Stromschiene 18 führen. Die MOSFET-Bauelemente sind dann nicht wie im ersten Ausführungsbeispiel in einer "high side"-Schaltung angeordnet, sondern in einer "low side"-Schaltung.

Alle beschriebenen Zentralelektriken zeichnen sich durch eine besonders gute Wärmeableitung der von den Lastschalteinrichtungen erzeugten Wärme aus.

Wie aus den Figuren leicht zu erkennen, weisen die erfindungsgemäßen Zentralelektriken insgesamt insofern einen modularen Aufbau auf, als jeweils nur entweder die Steuerschaltungen gegeneinander ausgetauscht zu werden brauchen oder auch die in den Seitenabschnitten 36 angeordneten Komponenten.

### Bezugszeichenliste

- 10: Gehäuseunterteil
- 12, 12', 12": Gehäuseoberteil
- 14: Gehäuse
- 16, 16": Trägerplatte
- 18: Stromschienen
- 20: Schaltungsträger
- 22, 22',22": Steuerschaltung
- 24: Ausgangskontaktelemente
- 26: Eingangskontaktelemente
- 28: MOSFET-Bauelemente
- 30: Kühlkörper
- 32: Zähne
- 34: Anschlusslaschen
- 36: Seitenabschnitte
- 38: Mittelabschnitt
- 40: Kontaktabschnitte
- 42: Steckverbinder
- 44: Ausnehmungen
- 46: Ausnehmungen
- 48: Steckkontaktzungen
- 50: Steckkontaktzungen
- 52: Laststromanschlüsse
- 54: Verbindungsdrähte
- 56: Steuereingänge
- 58, 58': Steuerausgänge
- 60, 60', 60": Bonddrähte
- 62: Verbindungsleitungen
- 64: Steuereingänge
- 66: Steckverbinderöffnung
- 68: Führungskragen
- 70: Kontaktelementöffnungen
- 72: Rastelemente
- 73: Rastelemente
- 74: Rastelemente
- 75: Rastelemente
- 76: Platine
- 78: Relais
- 80: Sicherungen
- 81: Drähte
- 82: Steckverbinder
- 84: Stanzgitterelemente
- 86: Sicherung
- 88: Relais
- 90: Ausgangskontaktelemente
- 92: Stromschienenverlängerungen
- 94: Brücke
- 96: Ausnehmungen

## Patentansprüche

1. Zentralelektrik für ein Kraftfahrzeug mit
einer Steuerschaltung (22; 22'; 22") auf einem Schaltungsträger (20),
wenigstens einer Stromschiene (18), die wenigstens teilweise neben dem Schaltungsträger (20) angeordnet ist und wenigstens einen nicht auf dem Schaltungsträger (20) oder einem Teil der Steuerschaltung (22; 22'; 22") aufliegenden Kontaktabschnitt (40) aufweist,
wenigstens zwei Ausgangskontaktelementen (24; 90), und
wenigstens zwei Lastschalteinrichtungen (28, 78, 88), die jeweils einen mit einem entsprechenden Steuerausgang (58, 58") der Steuerschaltung (22; 22'; 22") elektrisch verbundenen Steuereingang (56) und zwei Laststromanschlüsse (52), von denen einer mit der Stromschiene (18) und der andere mit jeweils einem der beiden Ausgangskontaktelemente (24; 90) elektrisch verbunden ist, aufweisen, und die ganz oder teilweise auf der Stromschiene (18) und/oder auf einer der Steuerschaltung (22; 22'; 22") abgewandten Seite der Stromschiene (18) angeordnet sind,
**dadurch gekennzeichnet,**
**dass** die wenigstens zwei Ausgangskontaktelemente (24; 90) auf einer von der Steuerschaltung (22; 22'; 22") wegweisenden Seite der Stromschiene (18) angeordnet sind,
**dass** der Schaltungsträger (20), die Stromschiene (18) und die Ausgangskontaktelemente (24; 90) auf einem flächigen Trägerelement (16, 16") angeordnet sind, und
**dass** ein Bereich (36) der Oberfläche des Trägerelements (16, 16"), auf dem die Ausgangskontaktelemente (24; 90) angeordnet sind, durch wenigstens den Kontaktabschnitt (40) der Stromschiene (18) räumlich von dem Schaltungsträger (20) getrennt ist.

2. Zentralelektrik nach Anspruch 1,
**dadurch gekennzeichnet,**
**dass** die Stromschiene (18) zur Ableitung von Wärme mit einem Kühlkörper (30) thermisch gekoppelt ist.

3. Zentralelektrik nach einem der vorhergehenden Ansprüche,
**dadurch gekennzeichnet,**
**dass** wenigstens eine der Lastschalteinrichtungen (28) auf der Stromschiene (18) gehalten ist.

4. Zentralelektrik nach einem der vorhergehenden Ansprüche,
**dadurch gekennzeichnet,**
**dass** die Lastschalteinrichtung ein nicht verpacktes elektronisches Bauelement, vorzugsweise ein MOSFET-Bauelement (28), aufweist, das auf der Stromschiene (18) oder einem Stanzgitterelement neben der Stromschiene angeordnet ist.

5. Zentralelektrik nach einem der vorhergehenden Ansprüche,
**dadurch gekennzeichnet,**
**dass** die Steuerschaltung (22; 22'; 22") zur Verwendung eines MOSFET-Bauelements (28) mit Strommessung ausgebildet ist.

6. Zentralelektrik nach einem der vorhergehenden Ansprüche,
**dadurch gekennzeichnet,**
**dass** wenigstens eine der Lastschalteinrichtungen ein Relais (78, 88) ist, das auf der dem Schaltungsträger (20) abgewandten Seite der Stromschiene (18) angeordnet ist.

7. Zentralelektrik nach einem der vorhergehenden Ansprüche,
**dadurch gekennzeichnet,**
**dass** die Steuerschaltung (22; 22'; 22") zur Verwendung sowohl mit Lastschalteinrichtungen (28, 78, 88) zum Schalten von 12V Versorgungsspannung als auch Lastschalteinrichtungen (28, 78, 88) zum Schalten von 42V Versorgungsspannung ausgebildet ist.

8. Zentralelektrik nach einem der vorhergehenden Ansprüche,
**dadurch gekennzeichnet,**
**dass** sich zwei Stromschienen (18) entlang gegenüberliegenden Seiten des Schaltungsträgers (20) erstrecken.

9. Zentralelektrik nach einem der vorhergehenden Ansprüche,
**dadurch gekennzeichnet,**
**dass** die Ausgangskontaktelemente (24; 90) als Steckkontaktelemente ausgebildet sind.

10. Zentralelektrik nach Anspruch 9,
**dadurch gekennzeichnet,**
**dass** ein Gehäuseteil (12) mit einer Öffnung (70) und einer die Öffnung (70) wenigstens teilweise umgebenden Führung (68) vorgesehen ist, und wenigstens einige der Ausgangkontaktelemente (24; 90) so angeordnet sind, dass diese zusammen mit der Führung (68) einen Steckverbinder oder eine Geräteaufnahme bilden.

11. Zentralelektrik nach Anspruch 9 oder 10,
**dadurch gekennzeichnet,**
**dass** wenigstens eines der Ausgangskontaktelemente (24; 90) einstückig als Biegeteil ausgebildet ist, dessen nicht zur Herstellung eines Steckkontaktes verwendetes Ende mit dem entsprechenden Laststromanschluss (52) einer der Lastschalteinrichtungen (28, 78, 88) verbunden ist.

12. Zentralelektrik nach Anspruch 10 oder 11,
**dadurch gekennzeichnet,**
**dass** ein zur Bildung des Steckverbinders oder der Geräteaufnahme verwendetes Eingangskontaktelement mit einem Eingang der Steuerschaltung verbunden ist.

13. Zentralelektrik nach einem der vorhergehenden Ansprüche,
**dadurch gekennzeichnet,**
**dass** auf dem Schaltungsträger (20) ein mit der Steuerschaltung (22; 22'; 22") verbundener Steckverbinder (42) angeordnet ist.

14. Zentralelektrik nach einem der vorhergehenden Ansprüche,
**dadurch gekennzeichnet,**
**dass** eine Befestigungseinrichtung vorgesehen ist, um eine Verlängerung (92) der Stromschiene (18) zu halten und diese elektrisch leitend mit der Stromschiene (18) zu verbinden.

15. Zentralelektrik nach einem der vorhergehenden Ansprüche,
**dadurch gekennzeichnet,**
**dass** die Befestigungseinrichtung dazu ausgebildet ist, Verlängerungen (92) zweier auf gegenüberliegenden Seiten der Steuerschaltung (22; 22'; 22"), vorzugsweise parallel, angeordneter Stromschienen (18) zu halten und diese elektrisch leitend mit den Stromschienen (18) zu verbinden.

16. Zentralelektrik nach einem der vorhergehenden Ansprüche,
**dadurch gekennzeichnet,**
**dass** zwei durch die Befestigungseinrichtung gehaltene Stromschienenverlängerungen (92) durch eine Brücke (94) elektrisch miteinander verbunden sind.

## Claims

1. Central electrical system for a motor vehicle, comprising
a control circuit (22; 22'; 22") on a circuit carrier (20),
at least one current rail (18), which is at least partly arranged adjacently to the circuit carrier (20) and which has at least one contact section (40) which does not lie on the circuit carrier (20) or on a part of the control circuit (22; 22'; 22"),
at least two output contact elements (24; 90), and
at least two load switching devices (28, 78, 88), each of which has a control input (56) which is electrically connected to a corresponding control output (58, 58") of the control circuit (22; 22'; 22") and two load terminals (52), one of which is electrically connected to the current rail (18) and the other of which is electrically connected to a respective one of the two output contact elements (24; 90), and which are wholly or partly arranged on the current rail (18) and/or on a side of the current rail (18) which faces away from the control circuit (22; 22'; 22").,
**characterized in that**
the at least two output contact elements (24; 90) are arranged on a side of the current rail (18) which faces away from the control circuit (22; 22'; 22");
**in that** the circuit carrier (20), the current rail (18) and the output contact elements (24; 90) are arranged on an areal carrier element (16, 16"); and
**in that** a region (36) of the surface of the carrier element (16, 16") on which the output contact elements (24; 90) are arranged is spatially separated from the circuit carrier (20) by at least the contact section (40) of the current rail (18).

2. Central electrical system in accordance with claim 1, **characterized in that** the current rail (18) is thermally coupled to a refrigerant body (30) for the dissipation of heat.

3. Central electrical system in accordance with any one of the preceding claims, **characterized in that** at least one of the load switching devices (28) is held on the current rail (18).

4. Central electrical system in accordance with any one of the preceding claims, **characterized in that** the load switching device has a non-packed electronic component, preferably a MOSFET component (28), which is arranged on the current rail (18) or on a stamped grid element adjacent to the current rail.

5. Central electrical system in accordance with any one of the preceding claims, **characterized in that** the control circuit (22; 22'; 22") is designed for the use of a MOSFET component (28) with current measurement.

6. Central electrical system in accordance with any one of the preceding claims, **characterized in that** at least one of the load switching devices is a relay (78, 88) which is arranged on the side of the current rail (18) which faces away from the circuit carrier (20).

7. Central electrical system in accordance with any one of the preceding claims, **characterized in that** the control circuit (22; 22'; 22") is designed for use both with load switching devices (28, 78, 88) for switching 12V supply voltage and with load switching devices (28, 78, 88) for switching 42V supply voltage.

8. Central electrical system in accordance with any one of the preceding claims, **characterized in that** two current rails (18) extend along opposite sides of the circuit carrier (20).

9. Central electrical system in accordance with any one of the preceding claims, **characterized in that** the output contact elements (24; 90) are designed as plug contact elements.

10. Central electrical system in accordance with claim 9, **characterized in that** a housing part (12) with an opening (70) and a guide (68) which at least partly surrounds the opening (70) is provided, and at least some of the output contact elements (24; 90) are arranged in such a manner that together with the guide (68) they form a plug connector or a mount for a piece of equipment.

11. Central electrical system in accordance with claim 9 or claim 10, **characterized in that** at least one of the output contact elements (24; 90) is formed in one piece as a bent part, the end of which not used for the production of a plug contact is connected to the corresponding load terminal (52) of one of the load switching devices (28, 78, 88).

12. Central electrical system in accordance with claim 10 or claim 11, **characterized in that** an input contact element which is used to form the plug connector or the mount for a piece of equipment is connected to an input of the control circuit.

13. Central electrical system in accordance with any one of the preceding claims, **characterized in that** a plug connector (42) which is connected to the control circuit (22; 22'; 22") is arranged on the circuit carrier (20).

14. Central electrical system in accordance with any one of the preceding claims, **characterized in that** a securing device is provided in order to hold an extension (92) of the current rail (18) and to connect the latter in an electrically conducting manner to the current rail (18).

15. Central electrical system in accordance with any one of the preceding claims, **characterized in that** the securing device is designed to hold extensions (92) of two current rails (18) which are arranged, preferably in parallel, on oppositely disposed sides of the control circuit (22; 22'; 22") and to connect them in an electrically conducting manner to the current rails (18).

16. Central electrical system in accordance with any one of the preceding claims, **characterized in that** two current rail extensions (92) which are held by the securing device are electrically connected to one another by a bridge (94).

## Revendications

1. Unité centrale électrique pour véhicule automobile comportant
un circuit de commande (22 ; 22' ; 22") sur un support de circuit (20),
au moins un rail électrique (18) qui est disposé au moins en partie à côté du support de circuit (20) et comporte au moins un segment de contact (40) ne reposant pas sur le support de circuit (20) ni sur une partie du circuit de commande (22 ; 22' ; 22"),
au moins deux éléments de contact de sortie (24 ; 90) et
au moins deux dispositifs de commutation de charge (28, 78, 88) qui comportent chacun une entrée de commande (56) reliée électriquement à une sortie de commande (58, 58") correspondante du circuit de commande (22 ; 22' ; 22"), et deux connexions de courant de charge (52) dont une est reliée électriquement au rail électrique (18) et l'autre à l'un des deux éléments de contact de sortie (24 ; 90), et qui sont disposés entièrement ou en partie sur le rail électrique (18) et/ou sur un côté du rail électrique (18), tourné à l'opposé du circuit de commande (22 ; 22' ; 22"),
**caractérisée**
**en ce que** les au moins deux éléments de contact de sortie (24 ; 90) sont disposés sur un côté du rail électrique (18), tourné à l'opposé du circuit de commande (22 ; 22' ; 22"),
**en ce que** le support de circuit (20), le rail électrique (18) et les éléments de contact de sortie (24 ; 90) sont disposés sur un élément de support (16 ; 16") plat, et
**en ce qu**'une zone (36) de la surface de l'élément de support (16 ; 16") sur laquelle sont disposés les éléments de contact de sortie (24 ; 90), est séparée dans l'espace du support de circuit (20) par au moins le segment de contact (40) du rail électrique (18).

2. Unité centrale électrique selon la revendication 1,
**caractérisée**
**en ce que** le rail électrique (18) est couplé thermiquement à un corps de refroidissement (30) pour dissiper la chaleur.

3. Unité centrale électrique selon l'une des revendications précédentes,
**caractérisée**
**en ce qu'**au moins l'un des dispositifs de commutation de charge (28) est maintenu sur le rail électrique (18).

4. Unité centrale électrique selon l'une des revendications précédentes,
**caractérisée**
**en ce que** le dispositif de commutation de charge comporte un composant électronique non empaqueté, de préférence un composant MOSFET (28) qui est disposé sur le rail électrique (18) ou sur un élément à grille découpée à côté du rail électrique.

5. Unité centrale électrique selon l'une des revendications précédentes,
**caractérisée**
**en ce que** le circuit de commande (22 ; 22' ; 22") est réalisé pour l'utilisation d'un composant MOSFET (28) avec mesure du courant.

6. Unité centrale électrique selon l'une des revendications précédentes,
**caractérisée**
**en ce qu'**au moins l'un des dispositifs de commutation de charge est un relais (78, 88) qui est disposé sur le côté du rail électrique (18) opposé au support de circuit (20).

7. Unité centrale électrique selon l'une des revendications précédentes,
**caractérisée**
**en ce que** le circuit de commande (22 ; 22', 22") est réalisé pour être utilisé aussi bien avec des dispositifs de commutation de charge (28, 78, 88) pour la commande d'une tension d'alimentation de 12 V, qu'avec des dispositifs de commutation de charge (28, 78, 88) pour la commande d'une tension d'alimentation de 42 V.

8. Unité centrale électrique selon l'une des revendications précédentes,
**caractérisée**
**en ce que** deux rails de courant (18) s'étendent le long de côtés opposés du support de circuit (20).

9. Unité centrale électrique selon l'une des revendications précédentes,
**caractérisée**
**en ce que** les éléments de contact de sortie (24 ; 90) sont réalisés sous la forme d'éléments de contact à enfichage.

10. Unité centrale électrique selon la revendication 9,
**caractérisée**
**en ce qu'**il est prévu une partie de boîtier (12) avec une ouverture (70) et un guide (68) entourant au moins en partie l'ouverture (70), et en ce qu'au moins quelques-uns des éléments de contact de sortie (24 ; 90) sont disposés de manière à former avec le guide (68) un connecteur à fiches ou un logement d'appareil.

11. Unité centrale électrique selon la revendication 9 ou 10,
**caractérisée**
**en ce qu'**au moins l'un des éléments de contact de sortie (24 ; 90) est réalisé d'une seule pièce sous la forme d'un élément flexible dont l'extrémité non utilisée pour la réalisation d'un contact à enfichage est reliée à la connexion de courant de charge (52) correspondante de l'un des dispositifs de commutation de charge (28, 78, 88).

12. Unité centrale électrique selon la revendication 10 ou 11,
**caractérisée**
**en ce qu'**un élément de contact d'entrée, utilisé pour former le connecteur à fiches ou le logement d'appareil, est relié à une entrée du circuit de commande.

13. Unité centrale électrique selon l'une des revendications précédentes,
**caractérisée**
**en ce qu'**un connecteur à fiches (42) relié au circuit de commande (22 ; 22', 22") est disposé sur le support de circuit (20).

14. Unité centrale électrique selon l'une des revendications précédentes,
**caractérisée**
**en ce qu'**il est prévu un dispositif de fixation pour maintenir un prolongement (92) du rail électrique (18) et relier celui-ci de manière électriquement conductrice au rail électrique (18).

15. Unité centrale électrique selon l'une des revendications précédentes,
**caractérisée**
**en ce que** le dispositif de fixation est réalisé pour maintenir des prolongements (92) de deux rails électriques (18) disposés, de préférence parallèlement, sur des côtés opposés du circuit de commande (22 ; 22' ; 22"), et pour relier ces prolongements de manière électriquement conductrice aux rails de courant (18).

16. Unité centrale électrique selon l'une des revendications précédentes,
**caractérisée**
**en ce que** deux prolongements de rail de courant (92) maintenus par le dispositif de fixation sont reliés électriquement entre eux par un pont (94).
